# EUROPEAN PATENT APPLICATION

(11) **EP 4 546 117 A1**
(43) Date of publication of application: **30.04.2025**
(21) Application number: 23875207.5
(22) Date of filing: 04.10.2023
(51) Int. Cl.: G06F 8/65, G06F 8/71, G06F 9/451, G06F 9/4401

(54) **METHOD FOR UPDATING FIRMWARE FOR VACUUM CLEANER, VACUUM CLEANER FOR PERFORMING SAME, AND COMPUTING DEVICE**

(30) Priority: 05.10.2022 KR 20220127171
(71) Applicant: Samsung Electronics Co., Ltd., Suwon-si, Gyeonggi-do 16677 (KR)
(72) Inventor: EUN, Junghwi, Suwon-si, Gyeonggi-do 16677 (KR)
(74) Representative: Gulde & Partner
(86) International application number: PCT/KR2023/015243
(87) International publication number: WO 2024/076144

(57) **Abstract**

Provided is a method of updating a firmware of a vacuum cleaner including a station and a cleaner body. The method includes receiving, by the cleaner body, a firmware update condition check request from the station when a new version of the firmware exists, checking, by the cleaner body, whether firmware update conditions have been satisfied, transmitting, by the cleaner body, a result of the checking to the station, and when the firmware update conditions are satisfied and a user agrees to update the firmware, receiving, by the cleaner body, the new version of the firmware, and installing, by the cleaner body, the received new version of the firmware. The firmware update conditions include at least one of a communication condition, a location condition, or a battery condition of the cleaner body.

## Description

### TECHNICAL FIELD

The disclosure relates to a method of updating firmware of a vacuum cleaner composed of a station and a vacuum cleaner body, and a computing device for performing the method.

### BACKGROUND ART

Recently released cleaners (vacuum cleaners, robot cleaners, etc.) are gradually supporting various functions due to grafting artificial intelligence (Al) technology therein, and there is continuous technological development for implementing new functions.

When a new function is developed or an existing function is supplemented after a consumer purchases a vacuum cleaner, the new function may be added or the existing function may be supplemented for the previously purchased vacuum cleaner by updating the firmware of the vacuum cleaner.

However, if the vacuum cleaner does not have a wired connection port or a WiFi module, the consumer may need to visit a service center with the vacuum cleaner or a service technician may need to visit the consumer's home to update the firmware of the vacuum cleaner, which is inconvenient.

### DISCLOSURE

### TECHNICAL SOLUTION

According to an embodiment of the disclosure, a method of updating a firmware of a vacuum cleaner including a station and a cleaner body may include receiving, by the cleaner body, a firmware update condition check request from the station when a new version of firmware exists, checking, by the cleaner body, whether firmware update conditions have been satisfied, and transmitting, by the cleaner body, a result of the checking to the station, and when the firmware update conditions are satisfied and a user agrees to update the firmware, receiving, by the cleaner body, the new version of the firmware, and installing, by the cleaner body, the received new version of the firmware. The firmware update conditions may include at least one of a communication condition, a location condition, or a battery condition of the cleaner body.

According to an embodiment of the disclosure, a cleaner body of a vacuum cleaner, may include a memory storing a program for executing a firmware update, and a processor configured to execute the program to perform: receiving a firmware update condition check request from a station of the vacuum cleaner when a new version of a firmware exists, checking whether firmware update conditions have been satisfied, transmitting a result of the checking to the station, and when the firmware update conditions are satisfied and a user agrees to update the firmware, receiving the new version of the firmware, and installing the received new version of the firmware. The firmware update conditions may include at least one of a communication condition, a location condition, or a battery condition of the cleaner body.

According to an embodiment of the disclosure, a non-transitory computer-readable recording medium may have stored therein a computer program, which, when executed by a computer, performs at least one of embodiments of the above-described method.

According to an embodiment of the disclosure, a computer program may be stored in a computer-readable recording medium to execute at least one of the embodiments of the above-described method.

### BRIEF DESCRIPTION OF DRAWINGS

FIG. 1 is a view illustrating a system environment for updating the firmware of a vacuum cleaner composed of a station and a cleaner body, according to an embodiment of the disclosure.
FIG. 2 is a schematic block diagram of a structure of a cleaning body according to an embodiment of the disclosure.
FIG. 3 is a schematic block diagram of a structure of a station according to an embodiment of the disclosure.
FIG. 4 is a schematic block diagram of a structure of a server according to an embodiment of the disclosure.
FIG. 5 is a view for explaining an overall process of updating the firmware of a vacuum cleaner, according to an embodiment of the disclosure.
FIG. 6 is a flowchart of a method of updating the firmware of a vacuum cleaner, according to an embodiment of the disclosure.
FIG. 7 is a diagram illustrating a combination of firmware update conditions according to an embodiment of the disclosure.
FIGS. 8 through 10 are flowcharts of operations performed by a cleaner body in a method of updating the firmware of a vacuum cleaner, according to an embodiment of the disclosure.
FIGS. 11 and 12 are views for explaining a method of outputting a guide about a firmware update through a user interface (UI) of a cleaner body, according to an embodiment of the disclosure.
FIG. 13 is a view for explaining a method of obtaining a user's consent through a mobile terminal when firmware update conditions have been satisfied, according to an embodiment of the disclosure.
FIG. 14 is a flowchart for explaining sub-operations included in operation an operation of FIG. 8 of receiving and installing a new version of firmware.
FIGS. 15 and 16 are diagrams for explaining an embodiment of checking whether a user agrees to execute an update through a UI of a cleaner body instead of a mobile terminal, in a method of updating the firmware of a vacuum cleaner.
FIGS. 17 and 18 are diagrams for explaining embodiments in which a subject for checking whether firmware update conditions have been satisfied is changed to a station or a server.
FIGS. 19 and 20 are diagrams for explaining an embodiment in which a firmware update is performed by a mobile terminal instead of a station downloading a new version of firmware from a server and transmitting the downloaded new version of the firmware to a cleaner body.

### MODE OF DISCLOSURE

Throughout the disclosure, the expression "at least one of a, b or c" indicates only a, only b, only c, both a and b, both a and c, both b and c, all of a, b, and c, or variations thereof.

In the following description of the disclosure, descriptions of techniques that are well known in the art and not directly related to the disclosure are omitted. This is to clearly convey the gist of the disclosure by omitting any unnecessary explanation. Also, terms used below are defined in consideration of functions in the disclosure, and may have different meanings according to an intention of a user or operator, customs, or the like. Thus, the terms should be defined based on the description throughout the specification.

For the same reason, some elements in the drawings are exaggerated, omitted, or schematically illustrated. Also, actual sizes of respective elements are not necessarily represented in the drawings. In the drawings, the same or corresponding elements are denoted by the same reference numerals.

The advantages and features of the disclosure and methods of achieving the advantages and features will become apparent with reference to embodiments of the disclosure described in detail below with reference to the accompanying drawings. However, this is not intended to limit the disclosure to particular modes of practice, and all changes, equivalents, and substitutes that do not depart from the spirit and technical scope are encompassed in the disclosure. These embodiments are provided so that the disclosure will be thorough and complete, and will fully convey the scope of the disclosure to one of ordinary skill in the art. An embodiment of the disclosure may be defined according to the claims. Throughout the specification, like reference numerals or characters refer to like elements. In description of an embodiment of the disclosure, certain detailed explanations of related functions or configurations are omitted when it is deemed that they may unnecessarily obscure the subject matter of the disclosure. Also, terms used below are defined in consideration of functions in the disclosure, and may have different meanings according to an intention of a user or operator, customs, or the like. Thus, the terms should be defined based on the description throughout the specification.

Each block of flowchart illustrations and combinations of blocks in the flowchart illustrations may be implemented by computer program instructions. The computer program instructions may be provided to a processor of a general-purpose computer, special purpose computer, or other programmable data processing equipment, and the instructions, which are executed via the processor of the computer or other programmable data processing equipment, may generate means for performing functions specified in the flowchart block(s). The computer program instructions may also be stored in a computer-usable or computer-readable memory that may direct a computer or other programmable data processing equipment to function in a particular manner, and the instructions stored in the computer-usable or computer-readable memory may produce a manufactured article including instruction means that perform the functions specified in the flowchart block(s). The computer program instructions may be mounted on a computer or other programmable data processing equipment.

In addition, each block of a flowchart may represent a module, segment, or portion of code, which includes one or more executable instructions for implementing specified logical function(s). According to an embodiment of the disclosure, it is also possible that the functions mentioned in the blocks occur out of order. For example, two blocks shown in succession may in fact be executed substantially concurrently, or may be executed in the reverse order according to functions.

The term "unit" or ...' er(or) 'used herein may denote a software element or a hardware element such as a field-programmable gate array (FPGA) or an application-specific integrated circuit (ASIC), and performs a certain function. However, the term 'unit 'or '...er(or) 'is not limited to software or hardware. The term 'unit' or '... er(or) 'may be configured to be included in an addressable storage medium or to reproduce one or more processors. According to an embodiment of the disclosure, the term 'unit' or '... er(or)' may include, by way of example, object-oriented software components, class components, and task components, and processes, functions, attributes, procedures, subroutines, segments of a program code, drivers, firmware, a micro code, a circuit, data, a database, data structures, tables, arrays, and variables. Functions provided through a specific component or a specific '... unit' may be combined to reduce the number, or may be separated into additional components. According to an embodiment of the disclosure, the 'unit' or'...er(or)' may include one or more processors.

Before going into detail, the meanings of several terms will be defined.

In this specification, 'firmware' of a cleaner body denotes software of a main micom of the cleaner body (generally included in an input/output interface such as an LCD panel). In other words, hereinafter, firmware refers to software for controlling the overall operation of the cleaner body, and embodiments disclosed herein relate to methods for easily updating such firmware.

'Firmware update conditions' refer to one or more conditions needing to be satisfied to update the firmware of the cleaner body. Combinations of firmware update conditions may be presented in various ways, and specific examples thereof will be described below.

Embodiments of the disclosure will now be described more fully with reference to the accompanying drawings.

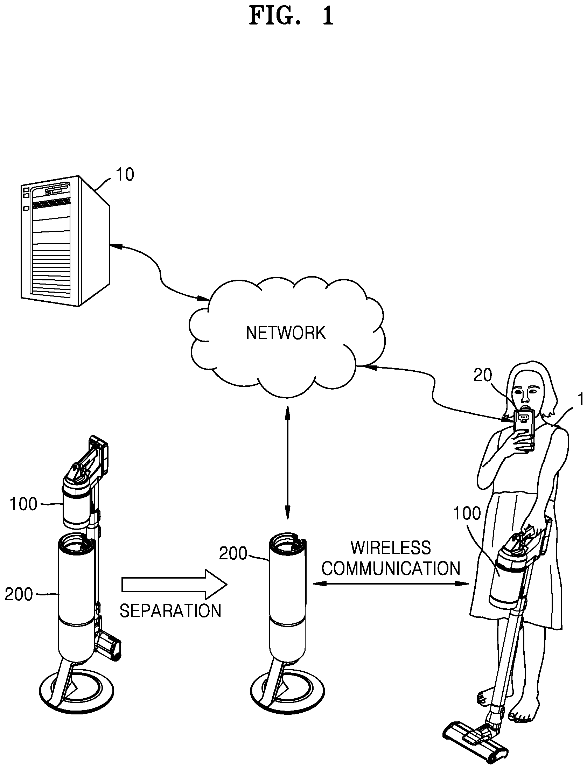

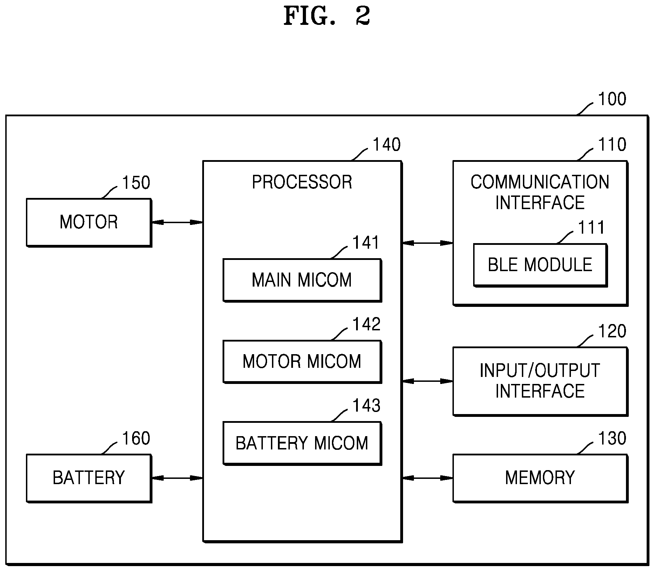

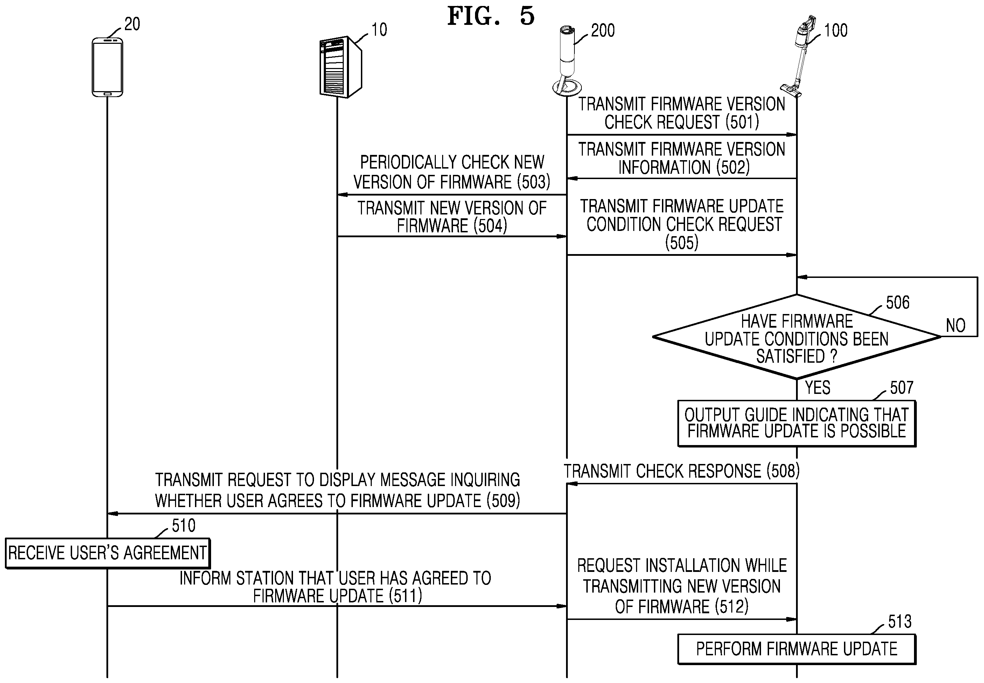

First, a system environment for updating the firmware of a cleaner body according to embodiments of the disclosure will be first described with reference to FIG. 1, and the configurations of devices (a cleaner body, a station, and a server) included in the system will be described with reference to FIGS. 2 through 4 and then a process of updating firmware by using the devices will be described with reference to FIGS. 5 through 20.

FIG. 1 is a view illustrating a system environment for updating the firmware of a vacuum cleaner composed of a station and a cleaner body, according to an embodiment of the disclosure.

Referring to FIG. 1, a system according to an embodiment of the disclosure may include a vacuum cleaner composed of a cleaner body 100 and a station 200, a server 10, and a mobile terminal 20, and the station 200, the server 10, and the mobile terminal 20 may be connected to one another through a network.

According to the embodiment shown in FIG. 1, the cleaner body 100 is a vacuum cleaner that sucks up dust by generating a suction force by using a motor, but is not limited thereto and may be any of various types of cleaners such as a robot cleaner.

The station 200 is a component for assisting or controlling the cleaner body 100. The cleaner body 100 may be stably mounted on the station 200, and the battery of the cleaner body 100 may be charged while the cleaner body 100 is being mounted on the station 200. When the cleaner body 100 is mounted on the station 200, the station 200 may perform an auxiliary role such as emptying the dust bin of the cleaner body 100.

By performing wireless communication with the cleaner body 100 through Bluetooth Low Energy (BLE) or the like, the station 200 may transmit, to the cleaner body 100, a command for controlling the cleaner body 100 and receive information related to the state of the cleaner body 100 from the cleaner body 100.

The station 200 may be connected to the server 10 or a user's mobile terminal 20 through WiFi communication to provide status information about the cleaner body 100 to the user or receive information or a command for controlling the cleaner body 100.

In embodiments disclosed herein, the main role of the station 200 is to determine whether a firmware update is necessary, and, when the firm update is necessary, control a process for the firmware update through BLE communication with the cleaner body 100. A detailed process in which the station 200 controls the firmware update of the cleaner body 100 will be described below with reference to other drawings.

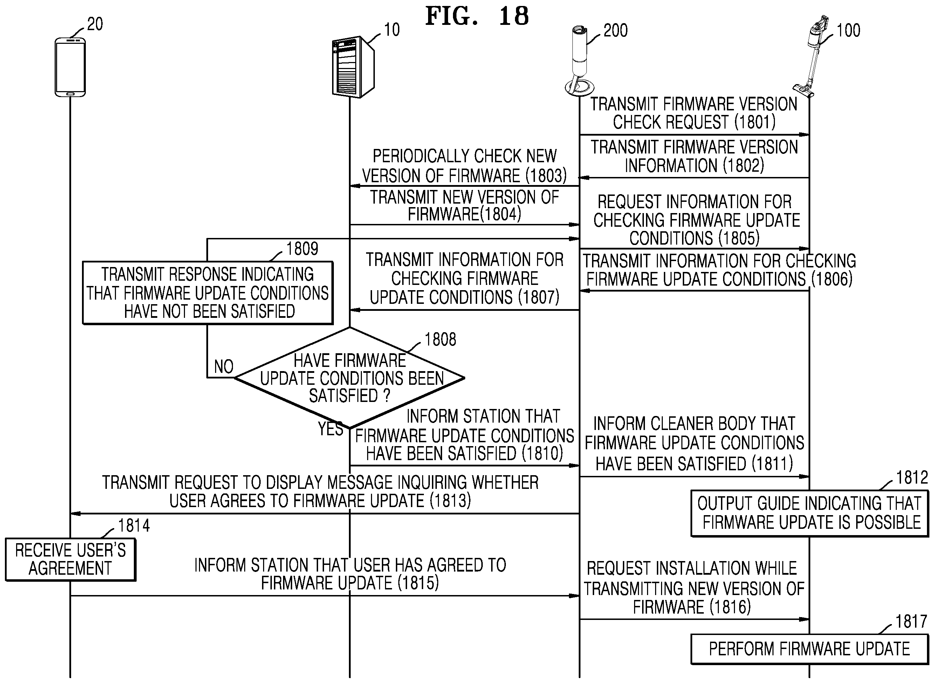

The server 10 plays a role of storing firmware to be installed in the cleaner body 100 and providing the stored firmware to the station 200 or the mobile terminal 20. The server 10 may play a role of determining whether firmware update conditions have been satisfied according to an embodiment of the disclosure. According to an embodiment of the disclosure (refer to the embodiment of FIG. 18), the server 10 may be an Internet of Things (IoT) server that integrally controls loT devices at home. In this case, the server 10 may provide information related to the control of the loT devices to a user 1 through the mobile terminal 20, and may receive commands for controlling the loT devices from the user 1 through the mobile terminal 20.

The mobile terminal 20 may be an electronic device such as a smartphone carried by the user 1, and the mobile terminal 20 may be connected to the server 10 through a network to process a portion of the process necessary for the firmware update of the cleaner body 100.

As shown in FIG. 1, the cleaner body 100 may be mounted while being coupled to the station 200 when not in use, and the user 1 may remove the cleaner body 100 from the station 200 and operate the cleaner body 100 when desiring to clean.

FIG. 2 is a schematic block diagram of a structure of the cleaning body 100 according to an embodiment of the disclosure. Referring to FIG. 2, the cleaning body 100 according to an embodiment of the disclosure may include a communication interface 110, an input/output interface 120, a memory 130, a processor 140, a motor 150, and a battery 160. However, the components of the cleaner body 100 are not limited to the above-described examples, and the cleaner body 100 may include more or fewer components than the aforementioned components. According to an embodiment of the disclosure, some or all of the communication interface 110, the input/output interface 120, the memory 130, and the processor 140 may be implemented as a single chip, and the processor 140 may include one or more processors.

The communication interface 110 is a component for transmitting and receiving signals (e.g., control commands and data) with an external device by wire or wirelessly, and may be configured to include a communication chipset that supports various communication protocols. According to an embodiment of the disclosure, the communication interface 110 may support BLE communication by including a BLE module 111. Accordingly, the cleaner body 100 may perform BLE communication with the station 200 or the mobile terminal 20.

The communication interface 110 may receive a signal from an external source and output the signal to the processor 140, or may transmit a signal output by the processor 140 to an external source.

The input/output interface 120 may include an input interface (e.g., a power button, a touch screen, a function button, and a microphone) for receiving control commands or information from a user, and an output interface (e.g., a display panel, a speaker and a vibrating device) for displaying an execution result of an operation under a control by the user or a state of the cleaner body 100. According to an embodiment of the disclosure, the input/output interface 120 may output a guide message related to firmware update of the cleaner body 100 and may receive, from the user 1, a response indicating whether to agree to the firmware update.

The memory 130, which is a component for storing various programs or data, may be composed of storage media, such as read-only memory (ROM), random access memory (RAM), hard disks, compact disc (CD)-ROM, and digital versatile discs (DVDs), or a combination thereof. The memory 130 may not exist separately but may be included in the processor 140 to be described below. The memory 130 may be implemented as a volatile memory, a non-volatile memory, or a combination of a volatile memory and a non-volatile memory. The memory 130 may store a program for performing operations according to embodiments of the disclosure that will be described below. The memory 130 may provide stored data to the processor 140, in response to a request by the processor 140. According to an embodiment of the disclosure, a program for updating the firmware of the cleaner body 100 may be stored in the memory 130.

The processor 140 is a component that controls a series of processes so that the cleaner body 100 operates according to embodiments described below, and may include one or a plurality of processors. The one or plurality of processors may be a general-purpose processor such as a central processing unit (CPU), an application processor (AP), or a digital signal processor (DSP), a graphics-only processor such as a graphics processing unit (GPU) or a vision processing unit (VPU), or an Al-only processor such as a neural processing unit (NPU). For example, when the one or plurality of processors are AI-only processors, the AI-only processors may be designed in a hardware structure specialized for processing a specific Al model.

The processor 140 may write data to the memory 130 or read data stored in the memory 130, and, in particular, may execute a program stored in the memory 130 to process data according to a predefined operation rule or an artificial intelligence (AI) model. Accordingly, the processor 140 may perform operations described in the following embodiments, and operations described as being performed by the cleaner body 100 in the following embodiments may be considered as being performed by the processor 140 unless otherwise specified. According to an embodiment of the disclosure, the processor 140 may perform a process for updating the firmware of the cleaner body 100, by executing the program stored in the memory 130.

In the embodiment of FIG. 2, the processor 140 may include a main microcomputer 141, a motor microcomputer 142, and a battery microcomputer 143. In FIG. 2, the main microcomputer (micom) 141, the motor micom 142, and the battery micom 143 are all shown as being mounted on the processor 140 as a single chip, but are not limited thereto. According to an embodiment of the disclosure, the main micom 141 may be mounted on the input/output interface 120, the motor micom 142 may be mounted on the motor 150, and the battery microcom 143 may be mounted on the battery 160. As described above, in embodiments of the disclosure, firmware to be updated may be software installed in the main micom 141.

The motor 150 is a component that provides power necessary for the cleaner body 100 to perform a cleaning operation. According to an embodiment of the disclosure, when the cleaner body 100 is a vacuum cleaner, the motor 150 may generate a suction force to suck in dust.

The battery 160 is a component for providing power to the components included in the cleaner body 100. As shown in FIG. 1, the cleaner body 100 may perform a cleaning operation while being separated from the station 200. At this time, because a power line is not connected to the cleaner body 100, the cleaner body 100 may perform a cleaning operation by using the power charged in the battery 160.

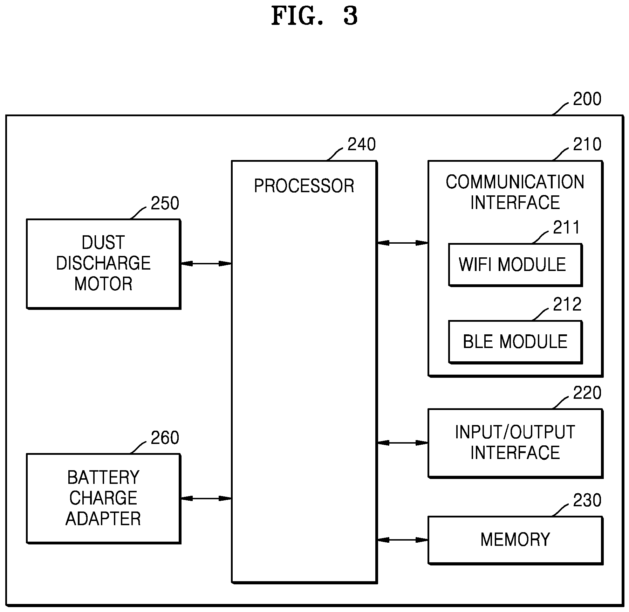

FIG. 3 is a schematic block diagram of a structure of the station 200 according to an embodiment of the disclosure. Referring to FIG. 3, the station 200 according to an embodiment of the disclosure may include a communication interface 210, an input/output interface 220, a memory 230, a processor 240, a dust discharge motor 250, and a battery charge adapter 260. However, the components of the station 200 are not limited to the above-described examples, and the station 200 may include more or fewer components than the aforementioned components. According to an embodiment of the disclosure, some or all of the communication interface 210, the input/output interface 220, the memory 230, and the processor 240 may be implemented as a single chip, and the processor 240 may include one or more processors.

The communication interface 210 is a component for transmitting and receiving signals (e.g., control commands and data) with an external device by wire or wirelessly, and may be configured to include a communication chipset that supports various communication protocols. According to an embodiment of the disclosure, the communication interface 210 may support WiFi communication and BLE communication by including a WiFi module 211 and a BLE module 212. In FIG. 3, the WiFi module 211 and the BLE module 212 are configured separately. In fact, the WiFi module 211 and the BLE module 212 may be implemented in separate chips, or a module composed of a single chip may be configured to perform both roles of the WiFi module 211 and the BLE module 212. Accordingly, the station 200 may communicate with the server 10 or the mobile terminal 20 through WiFi and may communicate with the cleaner body 100 or the mobile terminal 20 through BLE.

The communication interface 210 may receive a signal from an external source and output the signal to the processor 240, or may transmit a signal output by the processor 240 to an external source.

The input/output interface 220 may include an input interface (e.g., a power button, a touch screen, a function button, and a microphone) for receiving control commands or information from a user, and an output interface (e.g., a display panel and a speaker) for displaying an execution result of an operation under a control by the user or a state of the station 200.

The memory 230, which is a component for storing various programs or data, may be composed of storage media, such as read-only memory (ROM), random access memory (RAM), hard disks, compact disc (CD)-ROM, and digital versatile discs (DVDs), or a combination thereof. The memory 230 may not exist separately but may be included in the processor 240 to be described below. The memory 230 may be implemented as a volatile memory, a non-volatile memory, or a combination of a volatile memory and a non-volatile memory. The memory 230 may store a program for performing operations according to embodiments of the disclosure that will be described below. The memory 230 may provide stored data to the processor 240, in response to a request by the processor 240. According to an embodiment of the disclosure, a program for updating the firmware of the cleaner body 100 may be stored in the memory 230.

The processor 240 is a component that controls a series of processes so that the station 200 operates according to embodiments described below, and may include one or a plurality of processors. The one or plurality of processors may be a general-purpose processor such as a central processing unit (CPU), an application processor (AP), or a digital signal processor (DSP), a graphics-only processor such as a graphics processing unit (GPU) or a vision processing unit (VPU), or an AI-only processor such as a neural processing unit (NPU). For example, when the one or plurality of processors are Al-only processors, the AI-only processors may be designed in a hardware structure specialized for processing a specific Al model.

The processor 240 may write data to the memory 230 or read data stored in the memory 230, and, in particular, may execute a program stored in the memory 230 to process data according to a predefined operation rule or an Al model. Accordingly, the processor 240 may perform operations described in the following embodiments, and operations described as being performed by the station 200 in the following embodiments may be considered as being performed by the processor 240 unless otherwise specified. According to an embodiment of the disclosure, the processor 240 may perform a process for updating the firmware of the cleaner body 100, by executing the program stored in the memory 230.

The dust discharge motor 250 is a component for performing an operation of discharging dust from a dust bin mounted on the cleaner body 100 when the cleaner body 100 is coupled to the station 200. For example, according to an embodiment of the disclosure, the dust discharge motor 250 may provide a driving force for discharging dust in the dust bin by opening a cover of the dust bin mounted on the cleaner body 100.

The battery charge adapter 260 is a component for charging the battery 160 mounted on the cleaner body 100. According to an embodiment of the disclosure, the battery charge adapter 260 of the station 200 may provide power for charging the battery 160 by contacting a terminal for charging the battery 160 when the cleaner body 100 is coupled to the station 200.

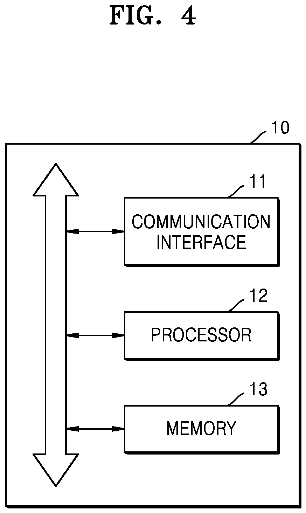

FIG. 4 is a schematic block diagram of a structure of the server 10 according to an embodiment of the disclosure. Referring to FIG. 4, the server 10 according to an embodiment of the disclosure may include a communication interface 11, a processor 12, and a memory 13. However, the components of the server 10 are not limited to the above-described examples, and the server 10 may include more or fewer components than the aforementioned components. According to an embodiment of the disclosure, some or all of the communication interface 11, the processor 12, and the memory 13 may be implemented as a single chip, and the processor 12 may include one or more processors.

The communication interface 11 is a component for transmitting and receiving signals (e.g., control commands and data) with an external device by wire or wirelessly, and may be configured to include a communication chipset that supports various communication protocols. According to an embodiment of the disclosure, the communication interface 11 may perform communication with the station 200 or the mobile terminal 20 through a network.

The communication interface 11 may receive a signal from an external source and output the signal to the processor 12, or may transmit a signal output by the processor 12 to an external source.

The processor 12 is a component that controls a series of processes so that the server 10 operates according to embodiments described below, and may include one or a plurality of processors. The one or plurality of processors may be a general-purpose processor such as a central processing unit (CPU), an application processor (AP), or a digital signal processor (DSP), a graphics-only processor such as a graphics processing unit (GPU) or a vision processing unit (VPU), or an AI-only processor such as a neural processing unit (NPU). For example, when the one or plurality of processors are Al-only processors, the AI-only processors may be designed in a hardware structure specialized for processing a specific Al model.

The processor 12 may write data to the memory 13 or read data stored in the memory 13, and, in particular, may execute a program stored in the memory 13 to process data according to a predefined operation rule or an Al model. Accordingly, the processor 12 may perform operations described in the following embodiments, and operations described as being performed by the server 10 in the following embodiments may be considered as being performed by the processor 12 unless otherwise specified. According to an embodiment of the disclosure, the processor 12 may perform a process for updating the firmware of the cleaner body 100, by executing the program stored in the memory 13.

The memory 13, which is a component for storing various programs or data, may be composed of storage media, such as read-only memory (ROM), random access memory (RAM), hard disks, compact disc (CD)-ROM, and digital versatile discs (DVDs), or a combination thereof. The memory 13 may not exist separately but may be included in the processor 12. The memory 13 may be implemented as a volatile memory, a non-volatile memory, or a combination of a volatile memory and a non-volatile memory. The memory 13 may store a program for performing operations according to embodiments of the disclosure that will be described below. The memory 13 may provide stored data to the processor 12, in response to a request by the processor 12. According to an embodiment of the disclosure, a program for updating the firmware of the cleaner body 100 may be stored in the memory 13. According to an embodiment of the disclosure, firmware to be installed in the cleaner body 100 may be uploaded to the memory 13.

A method of updating the firmware of the cleaner body 100 will now be described in detail with reference to the drawings.

Prior to describing specific embodiments, schematically describing a firmware update process, when a new version of firmware for adding new functions to the cleaner body 100 is developed, the new version of firmware may be stored in the server 10. The station 200 may compare the version of the firmware installed in the cleaner body 100 with the version of the firmware stored in the server 10 to determine whether a firmware update is necessary. When a firmware update is necessary, the cleaner body 100 may determine whether firmware update conditions have been satisfied. The determination as to whether the firmware update conditions have been satisfied may be made by the station 200 or the server 10 instead of the cleaner body 100. Specific examples of the firmware update conditions will be described in detail below. When the firmware update conditions have been satisfied, the cleaner body 100 or the station 200 may check whether a user agrees to update the firmware through the mobile terminal 20 or the cleaner body 100, and, when the user agrees, may perform an update by installing the new version of firmware stored in the server 10 in the cleaner body 100.

In embodiments described below, some processes may be changed, or a subject performing the some processes may be changed.

FIG. 5 is a view for explaining an overall process of updating the firmware of a vacuum cleaner, according to an embodiment of the disclosure.

Referring to FIG. 5, in operation 501, the station 200 transmits a firmware version check request to the cleaner body 100. According to an embodiment of the disclosure, the station 200 may inquire the cleaner body 100 about the version of the software installed in the main micom 141 of the cleaner body 100.

In operation 502, the cleaner body 100 transmits firmware version information to the station 200. According to an embodiment of the disclosure, the cleaner body 100 may check the version of the software installed in the main micom 141 and may inform the station 200 of the checked version.

In operation 503, the station 200 accesses the server 10 and checks whether a new version of firmware (a version of firmware after the firmware version installed in the cleaner body 100) is stored in the memory 13 of the server 10. When it is checked that a new version of firmware is not stored in the memory 13, the station 200 may periodically (e.g., every 24 hours) check whether the new version of firmware is uploaded to the memory 13.

When the new version of firmware is stored in the memory 13 of the server 10, the station 200 may request the server 10 to transmit the new version of firmware. In operation 504, the server 10 may transmit the new version of firmware to the station 200. The station 200 may store the received new version of firmware in the memory 230.

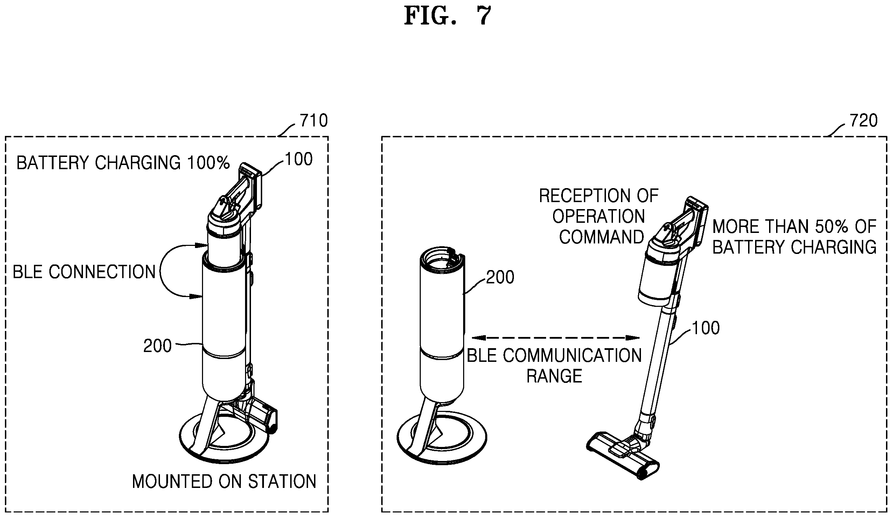

In operation 505, the station 200 may transmit a firmware update condition check request to the cleaner body 100. In other words, the station 200 may inquire the cleaner body 100 about whether the firmware update conditions have been satisfied. Specific examples of the firmware update conditions will now be described with reference to FIG. 7.

FIG. 7 is a diagram illustrating a combination of firmware update conditions according to an embodiment of the disclosure. FIG. 7 illustrates a first condition 710 and a second condition 720 as examples of the firmware update conditions. The first condition 710 and the second condition 720 are just examples, and the firmware update conditions may be set as a combination of various conditions. According to an embodiment of the disclosure, the firmware update conditions may be set to include at least one of a communication condition of the cleaner body 100 (e.g., whether the cleaner body 100 has been connected to another device), a location condition (e.g., whether a distance between the cleaner body 100 and another device is less than or equal to a reference value), or a battery condition (e.g., how a battery charge state of the cleaner body 100 is).

Regarding the first condition 710, when the cleaner body 100 is mounted on the station 200 (location condition) and is connected to the station 200 through BLE (communication condition), and the battery 160 of the cleaner body 100 is in a 100% charged state (battery condition), the cleaner body 100 may determine that the firmware update conditions have been satisfied.

Regarding the second condition 720, when a distance between the cleaner body 100 and the station 200 is within a BLE communication range (location condition and communication condition), and the battery 160 of the cleaner body 100 is charged to 50% or more (battery condition), the cleaner body 100 may determine that the firmware update conditions have been satisfied.

The firmware update conditions may be variously set to include at least one of a communication condition, a location condition, or a battery condition of the cleaner body 100 in addition to the first condition 710 and the second condition 720.

Referring back to FIG. 5, in operation 506, the cleaner body 100 may determine whether the firmware update conditions have been satisfied, and, when it is determined that the firmware update conditions have not been satisfied, may periodically re-check whether the firmware update conditions have been satisfied. When the firmware update conditions have been satisfied, the cleaner body 100 may output a guide indicating that the firmware update is possible, in operation 507. The cleaner body 100 may output a guide indicating that a firmware update is possible, through the input/output interface 120. For example, the cleaner body 100 may display a message indicating that a firmware update is possible, through a display panel included in the cleaner body 100, or may output a sound indicating that a firmware update is possible, through a speaker included in the cleaner body 100.

In operation 508, the cleaner body 100 may transmit, to the station 200, a check response indicating that the firmware update conditions have been satisfied.

In operation 509, the station 200 may transmit, to the mobile terminal 20 of the user 1, a request to display a message inquiring whether the user 1 agrees to a firmware update.

At the request of the station 200, the mobile terminal 20 may display a message asking whether to agree to the firmware update on the screen, and, when agreement is received from the user 1 in operation 510, the user 1 may inform the station 200 that the user 1 has agreed to the firmware update, in operation 511.

When the firmware update conditions are satisfied and the user 1 agrees to the firmware update as above, the station 200 may request installation while transmitting the new version of firmware stored in the memory 230 to the cleaner body 100, in operation 512.

In operation 513, the cleaner body 100 may perform a firmware update by installing the received new version of firmware.

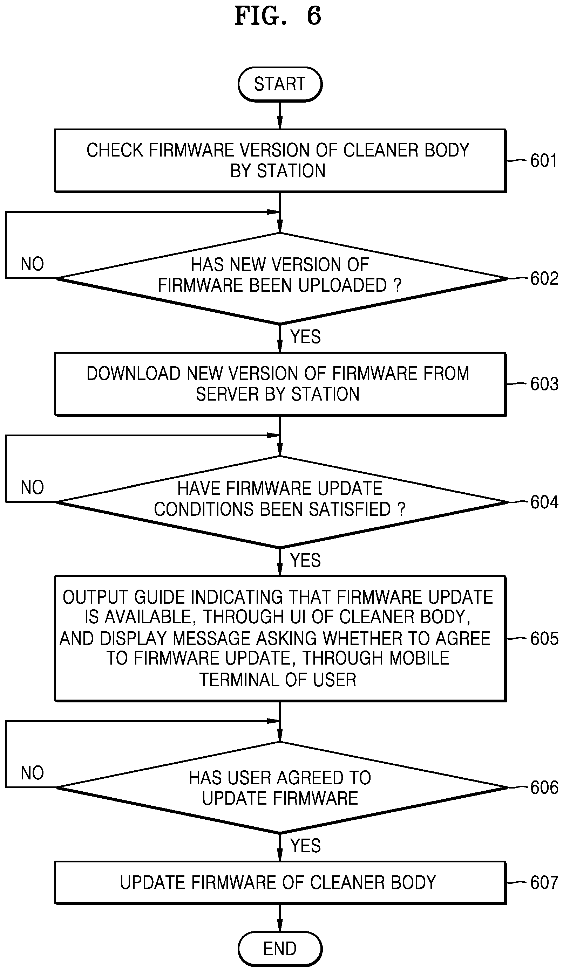

FIG. 6 is a flowchart of a method of updating the firmware of a vacuum cleaner, according to an embodiment of the disclosure.

Referring to FIG. 6, in operation 601, the station 200 may check the firmware version of the cleaner body 100, and, in operation 602, the station 200 may check whether a new version of firmware has been uploaded to the server 10.

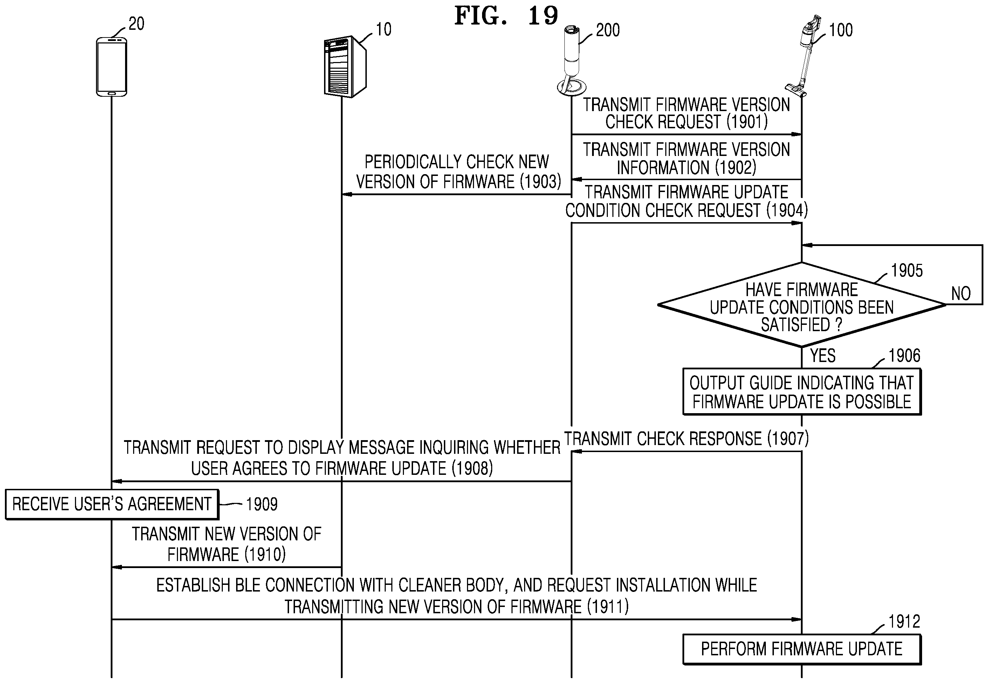

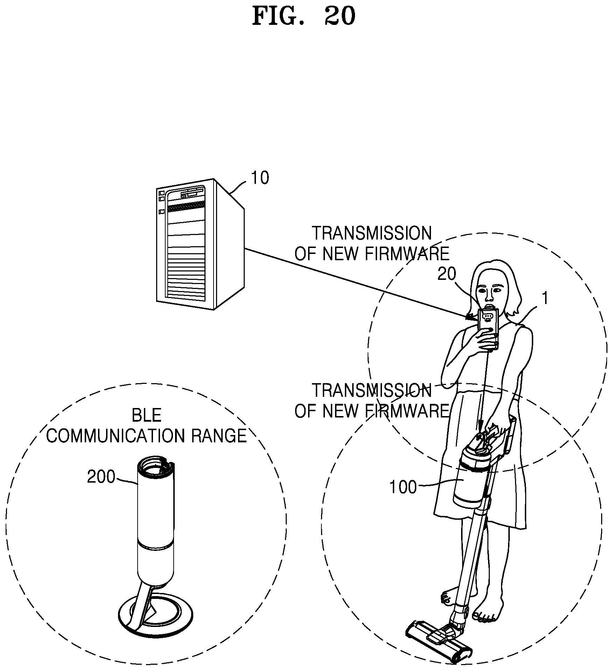

When a new version of firmware is uploaded to the server 10 as a result of checking, the station 200 may download and store the new version of firmware from the server 10, in operation 603. According to an embodiment of the disclosure, instead that the station 200 downloads the new version of firmware from the server 10, the mobile terminal 20 may download the new version of firmware from the server 10. This will be described in detail below with reference to FIGS. 19 and 20.

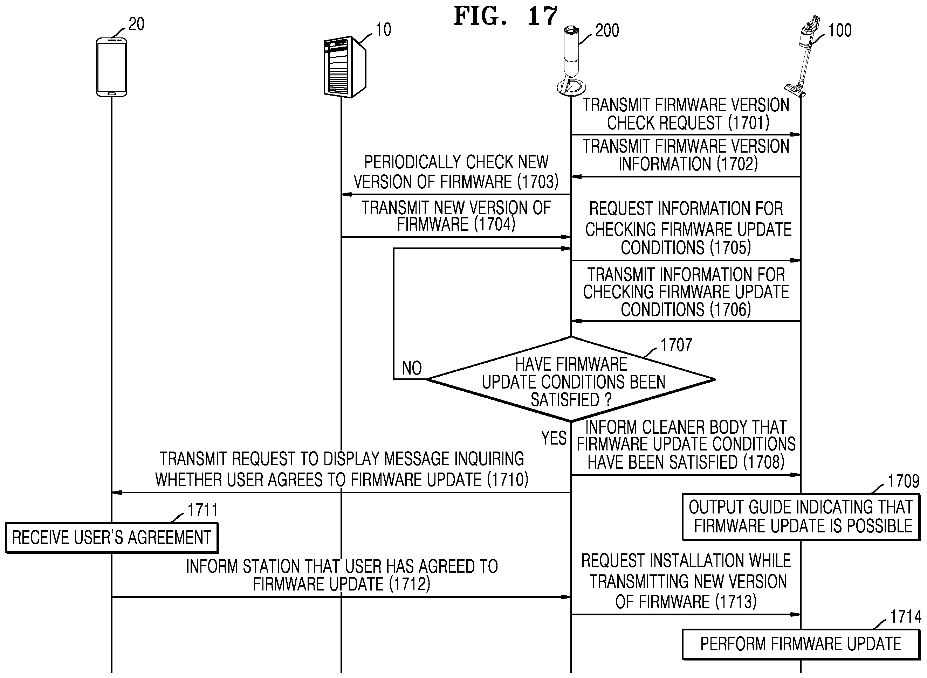

In operation 604, at the request of the station 200, the cleaner body 100 may check whether the firmware update conditions have been satisfied. According to an embodiment of the disclosure, the station 200 or the server 10 instead of the cleaner body 100 may check whether the firmware update conditions have been satisfied. An embodiment in which the station 200 checks whether the firmware update conditions have been satisfied will be described in detail below with reference to FIG. 17, and an embodiment in which the server 10 checks whether the firmware update conditions have been satisfied will be described in detail below with reference to FIG. 18.

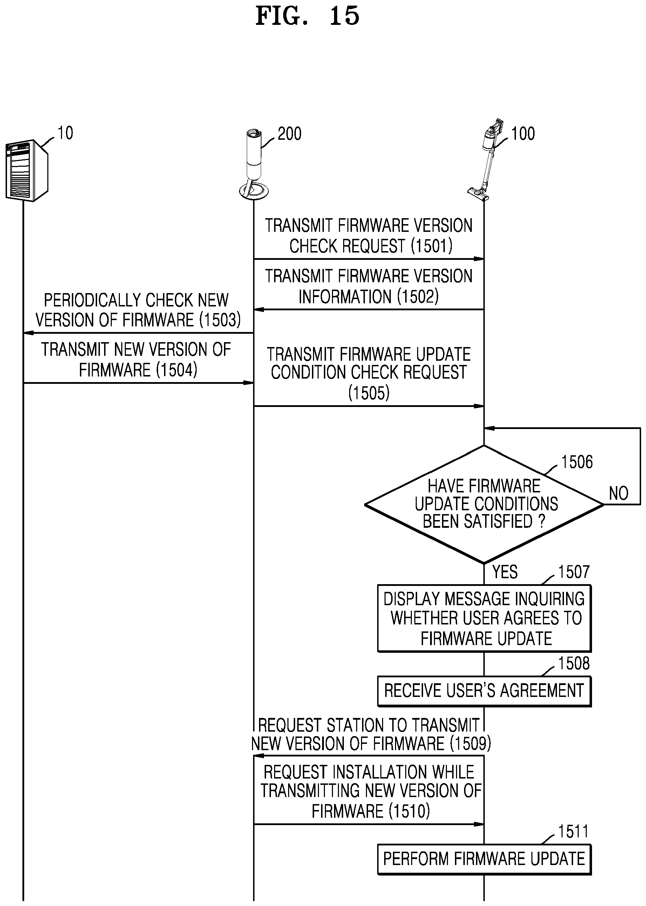

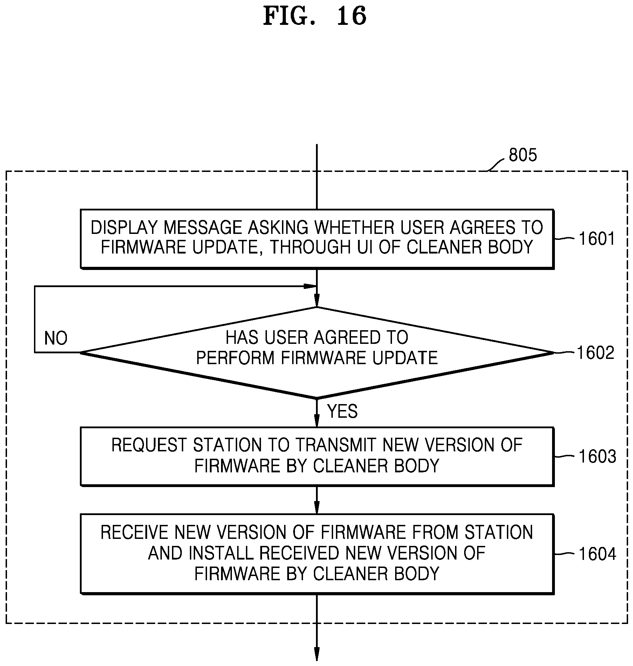

In operation 605, the cleaner body 100 may output a guide indicating that a firmware update is available, through the input/output interface 120, and the mobile terminal 20 of the user 1 may display a message asking whether to agree to the firmware update. Subsequently, in operation 606, the mobile terminal 20 may determine whether the user 1 has agreed to update the firmware through a touch input or the like. According to an embodiment of the disclosure, the user's consent to execute an update may be checked through the input/output interface 120 of the cleaner body 100 instead of the mobile terminal 20. This embodiment will be described in detail below with reference to FIGS. 15 and 16.

In operation 607, the cleaner body 100 may perform an update by receiving and installing the new version of firmware. As described above with reference to FIG. 5, the station 200 may download and store a new version of firmware from the server 10, and then transmit the new version of firmware to the cleaner body 100 when a user consent to the update is checked. However, according to an embodiment of the disclosure, the mobile terminal 20 instead of the station 200 may download and store the new version of firmware from the server 10, and then transmit the new version of firmware to the cleaner body 100. An embodiment in which the mobile terminal 20 instead of the station 200 transmits a new version of firmware to the cleaner body 100 will be described in detail below with reference to FIGS. 19 and 20.

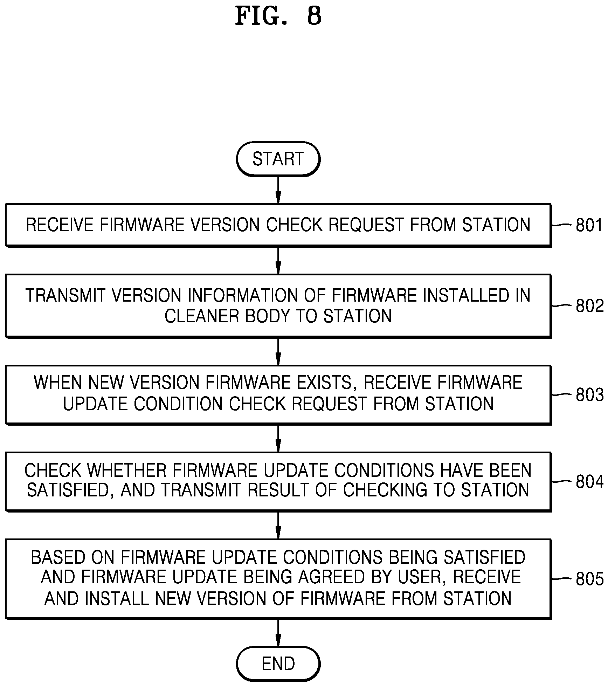

Methods of updating the firmware of the cleaner body 100, according to embodiments of the disclosure, will now be described with reference to FIGS. 8 through 10. The description will be focused on operations performed by the cleaner body 100.

FIGS. 8 through 10 are flowcharts of operations performed by the cleaner body 100 in a method of updating the firmware of a vacuum cleaner, according to an embodiment of the disclosure. The flowcharts shown in FIGS. 8 through 10 are results of summarizing the processes described above with reference to FIGS. 5 and 6 from the viewpoint of the cleaner body 100, so the above-described matters is also applicable to the flowcharts of FIGS. 8 through 10.

Referring to FIG. 8, when receiving a firmware version check request from the station 200 in operation 801, the cleaner body 100 may transmit version information of the firmware installed in the cleaner body 100 to the station 200, in operation 802.

In operation 803, when a new version firmware exists, the cleaner body 100 may receive a firmware update condition check request from the station 200.

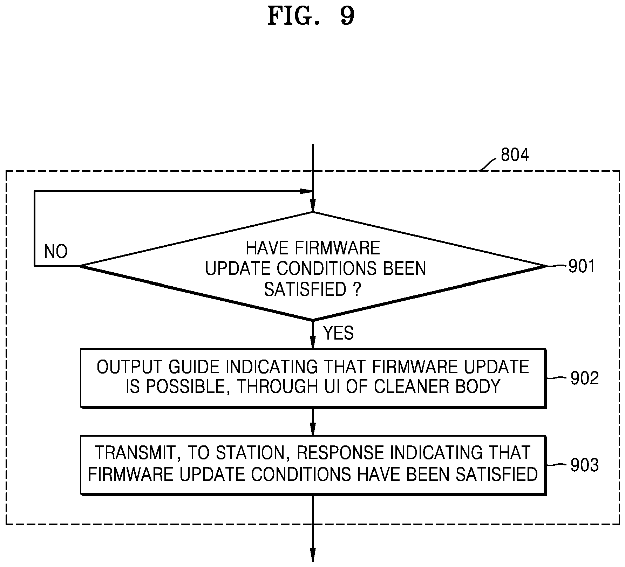

In operation 804, the cleaner body 100 may check whether firmware update conditions have been satisfied, and may transmit a result of the checking to the station 200. Operation 804 will now be described in more detail with reference to FIGS. 9 through 12.

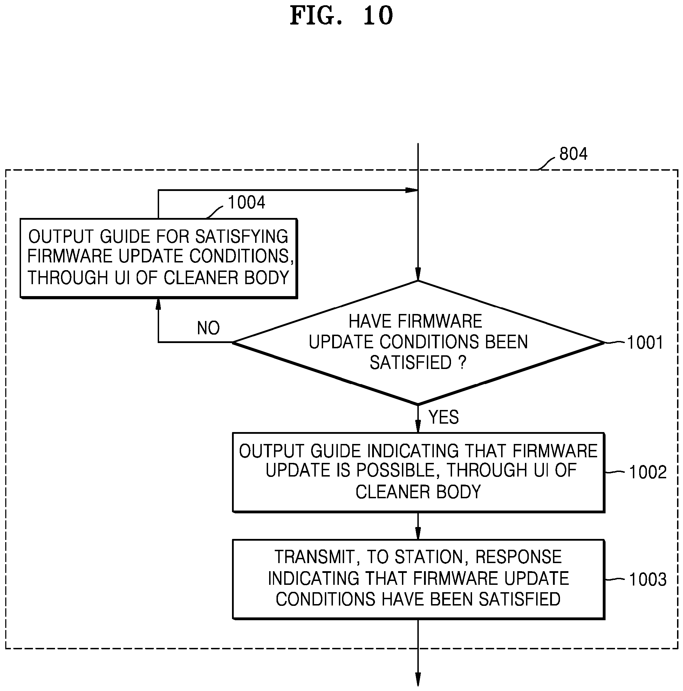

FIGS. 9 and 10 are flowcharts for explaining sub-operations included in operation 804 of FIG. 8, respectively. FIG. 9 is a flowchart of an embodiment in which the cleaner body 100 periodically re-checks whether the firmware update conditions have been satisfied, when it is checked that the firmware update conditions have not been satisfied, and FIG. 10 is a flowchart of an embodiment in which the user 1 is induced to actively contribute to condition satisfaction by outputting a guide for satisfying the firmware update conditions when it is checked that the firmware update conditions have not been satisfied.

Referring to FIG. 9, in operation 901, the cleaner body 100 may determine whether the firmware update conditions have been satisfied.

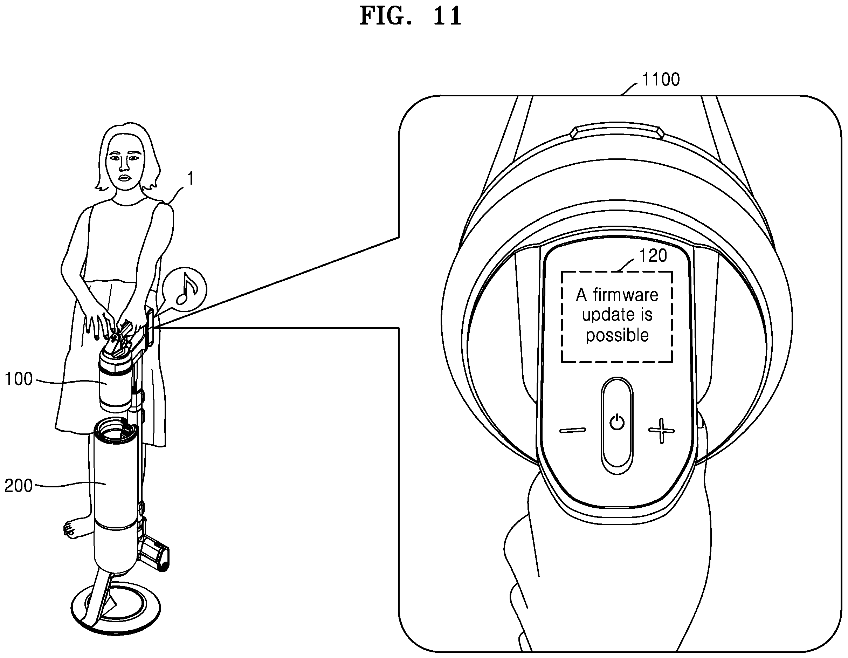

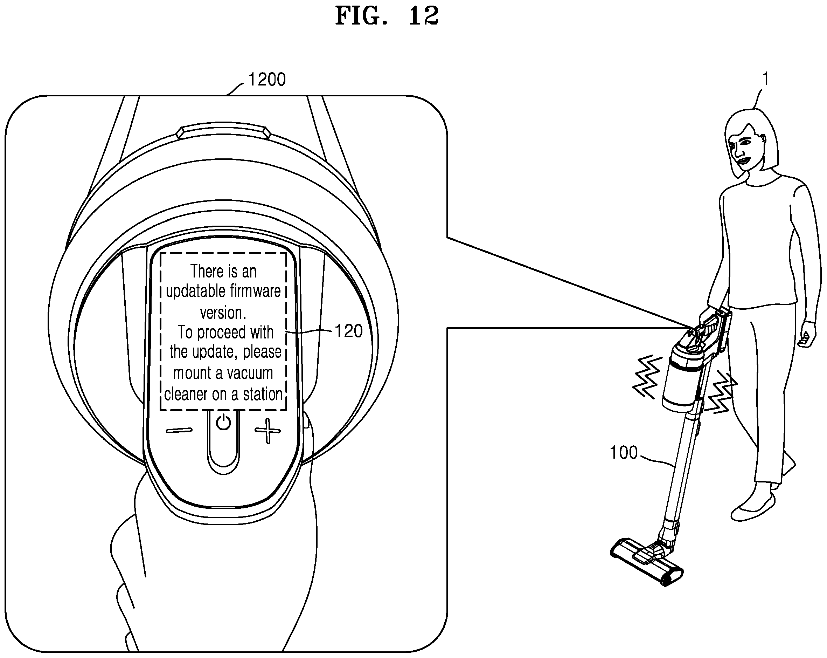

In operation 902, the cleaner body 100 may output a guide indicating that the firmware update is possible, through the input/output interface 120. A specific embodiment of operation 902 is shown in FIG. 11. Referring to FIG. 11, when the user 1 separates the cleaner body 100 from the station 200, the cleaner body 100 may display a guide message saying "Firmware update is available." on the input/output interface 120, as shown in a first enlarged view 1100. According to an embodiment of the disclosure, the cleaner body 100 may display a message through a display panel of the input/output interface 120, and at the same time may output a notification sound (e.g., a sound generated when an important event occurs, other than a sound normally generated when the cleaner body 100 has been separated from the station 200) through a speaker of the input/output interface 120 or may output a voice message indicating "Firmware update is available.". According to an embodiment of the disclosure, when the user 1 presses a power button of the cleaner body 100 or inputs an operation command, the cleaner body 100 may output a guide indicating that a firmware update is possible according to the various methods described above. According to an embodiment of the disclosure, as will be described below with reference to FIG. 12, the cleaner body 100 may output a guide indicating that a firmware update is possible, while outputting vibration.

In operation 903, the cleaner body 100 may transmit, to the station 200, a response indicating that the firmware update conditions have been satisfied.

Referring to FIG. 10, in operation 1001, the cleaner body 100 may determine whether the firmware update conditions have been satisfied.

When it is determined that the firmware update conditions have not been satisfied, the cleaner body 100 may output a guide for satisfying the firmware update conditions, through the input/output interface 120, in operation 1004. A specific embodiment of operation 1004 is shown in FIG. 12. Referring to FIG. 12, when the cleaner body 100 has checked that there is an updatable firmware version but the firmware update conditions have not been satisfied while the user 1 is performing cleaning by using the cleaner body 100, the cleaner body 100 may output a guide message indicating "There is an updatable firmware version. To proceed with the update, please mount a vacuum cleaner on a station." through the display panel of the input/output interface 120, as shown in a second enlarged view 1200. According to an embodiment of the disclosure, the cleaner body 100 may inform the user 1 that there is an event to be checked, by outputting vibration. In a situation where the user 1 operates the cleaner body 100, there is a possibility that the user 1 misses a notification sound or a guide message due to noise, and thus, a notification may be given to the user 1 through vibration.

Referring back to FIG. 10, when it is determined in operation 1001 that the firmware update conditions have been satisfied, the cleaner body 100 may output a guide indicating that firmware update is possible, through the input/output interface 120, in operation 1002. Operation 1002 may be performed in the same way as operation 902 described above.

In operation 1003, the cleaner body 100 may transmit, to the station 200, a response indicating that the firmware update conditions have been satisfied.

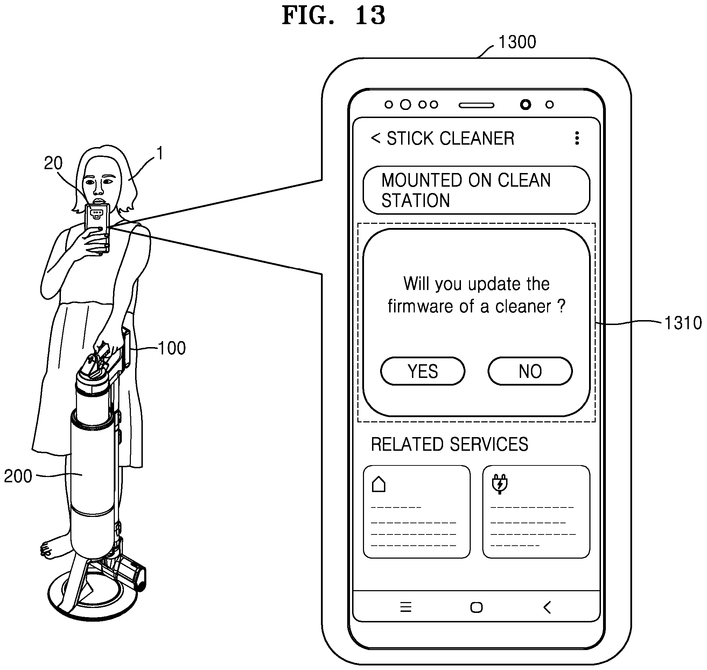

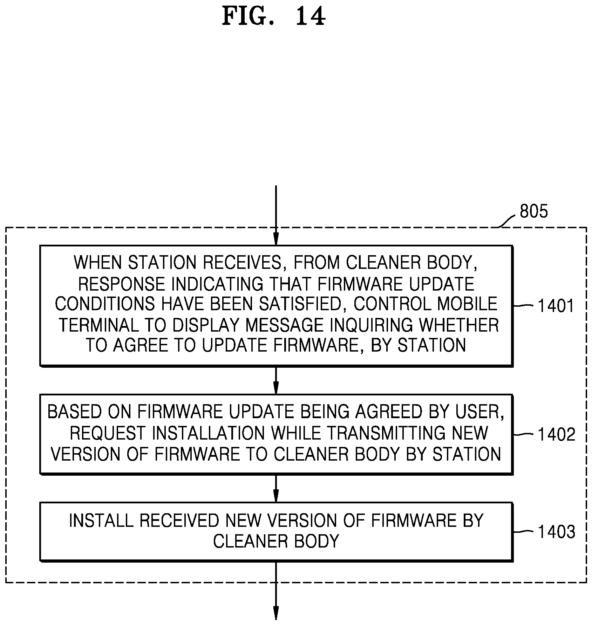

Referring back to FIG. 8, in operation 805, when the firmware update conditions are satisfied and the user 1 agrees to a firmware update, the cleaner body 100 may receive and install a new version of firmware from the station 200. Operation 805 will now be described in more detail with reference to FIGS. 13 through 16. FIGS. 13 and 14 are diagrams related to an embodiment of checking whether the user 1 agrees to update the firmware through the mobile terminal 20, and FIGS. 15 and 16 are diagrams related to an embodiment of checking whether the user 1 agrees to update the firmware through the cleaner body 100.

FIG. 13 is a view for explaining a method of obtaining a user's consent through a mobile terminal when firmware update conditions have been satisfied, according to an embodiment of the disclosure. Referring to FIG. 13, when the station 200 checks that the firmware update conditions have been satisfied, while the cleaner body 100 is mounted on the station 200, the station 200 may request display of a message inquiring whether to agree to update the firmware on the mobile terminal 20 of the user 1 through WiFi communication. The mobile terminal 20 may display a pop-up message 1310 on a screen 1300 according to a request from the station 200. At this time, the mobile terminal 20 may be in a state in which an application for controlling a vacuum cleaner (100 and 200) has been executed, and the mobile terminal 20 may display information related to control of the cleaner (100 and 200) by communicating with the station 200 directly or via an loT server or the like while the application has been executed, and may receive a command from the user 1 and transmit the received command to the cleaner (100 and 200).

According to an embodiment of the disclosure, regardless of the location of the mobile terminal 20, when the station 200 checks that the firmware update conditions have been satisfied, the station 200 may request the mobile terminal 20 to display the pop-up message 1310. According to an embodiment of the disclosure, after the station 200 checks that the firmware update conditions have been satisfied, when the user 1 separates the cleaner body 100 from the station 200, the station 200 may request the mobile terminal 20 to display the pop-up message 1310. According to an embodiment of the disclosure, after the station 200 checks that the firmware update conditions have been satisfied, when the mobile terminal 20 is located within a certain distance from the station 200 or the cleaner body 100, the station 200 may request the mobile terminal 20 to display the pop-up message 1310.

When the user 1 agrees to update the firmware through the pop-up message 1310 displayed on the screen 1300 of the mobile terminal 20, the station 200 may request installation while transmitting a new version of firmware to the cleaner body 100, and the cleaner body 100 may install the received new version of firmware.

FIG. 14 is a flowchart for explaining sub-operations included in operation 805 of FIG. 8. Referring to FIG. 14, in operation 1401, when receiving a response indicating that the firmware update conditions have been satisfied, from the cleaner body 100, the station 200 may control the mobile terminal 20 to display a message inquiring whether to agree to update the firmware. In operation 1402, when the user 1 agrees to the firmware update, the station 200 may request installation while transmitting the new version of firmware to the cleaner body 100. In operation 1403, the cleaner body 100 may install the received new version of firmware.

According to an embodiment of the disclosure, it may be checked through the cleaner body 100 other than mobile terminal 20 whether the user 1 agrees to update the firmware. FIGS. 15 and 16 are diagrams for explaining an embodiment of checking whether a user agrees to execute an update through a user interface (UI) of the cleaner body 100 instead of the mobile terminal 20, in a method of updating the firmware of a vacuum cleaner.

Referring to FIG. 15, in operation 1501, the station 200 transmits a firmware version check request to the cleaner body 100, and, in operation 1502, the cleaner body 100 may transmit version information of the firmware installed in the cleaner body 100 to the station 200.

In operation 1503, the station 200 may access the server 10 to periodically check whether a new version of firmware is stored in the memory 13 of the server 10.

When it is checked that the new version of firmware is stored in the memory 13 of the server 10, the station 200 may request the server 10 to transmit the new version of firmware, and, in operation 1504, the server 10 may transmit the new version of firmware to the station 200.

In operation 1505, the station 200 may transmit a firmware update condition check request to the cleaner body 100. In other words, the station 200 may inquire the cleaner body 100 about whether the firmware update conditions have been satisfied.

In operation 1506, the cleaner body 100 may determine whether the firmware update conditions have been satisfied, and, when it is determined that the firmware update conditions have not been satisfied, may periodically re-check whether the firmware update conditions have been satisfied.

When the firmware update conditions have been satisfied, the cleaner body 100 may display a message asking whether to agree to the firmware update on the input/output interface 120 of the cleaner body 100, in operation 1507.

When the user 1 has agreed to update the firmware through the input/output interface 120 of the cleaner body 100 in operation 1508, the cleaner body 100 may request the station 200 to transmit a new version of firmware, in operation 1509.

When the station 200 transmits a new version of firmware to the cleaner body 100 according to a request in operation 1510, the cleaner body 100 may perform a firmware update by installing the received new version of firmware, in operation 1511.

FIG. 16 is a flowchart for explaining sub-operations included in operation 805 of FIG. 8. Referring to FIG. 16, in operation 1601, the cleaner body 100 may display a message asking whether the user 1 agrees to the firmware update, through the UI (input/output interface 120) of the cleaner body 100.

In operation 1602, the cleaner body 100 may check whether the user 1 has agreed to perform a firmware update. When the user 1 has agreed to update the firmware through the input/output interface 120 of the cleaner body 100, the cleaner body 100 may request the station 200 to transmit a new version of firmware, in operation 1603. In operation 1604, the cleaner body 100 may receive the new version of firmware from the station 200 and install the received new version of firmware.

In the embodiments described above, the cleaner body 100 has checked whether the firmware update conditions have been satisfied. According to an embodiment of the disclosure, the station 200 or the server 10 may check whether the firmware update conditions have been satisfied.

FIGS. 17 and 18 are diagrams for explaining embodiments in which a subject for checking whether firmware update conditions have been satisfied is changed to a station or a server. In the embodiment shown in FIG. 17, the station 200 may check whether the firmware update conditions have been satisfied, and, in the embodiment shown in FIG. 18, the server 10 may check whether the firmware update conditions have been satisfied.

Referring to FIG. 17, in operation 1701, the station 200 transmits a firmware version check request to the cleaner body 100, and, in operation 1702, the cleaner body 100 may transmit version information of the firmware installed in the cleaner body 100 to the station 200.

In operation 1703, the station 200 may access the server 10 to periodically check whether a new version of firmware is stored in the memory 13 of the server 10.

When it is checked that the new version of firmware is stored in the memory 13 of the server 10, the station 200 may request the server 10 to transmit the new version of firmware, and, in operation 1704, the server 10 may transmit the new version of firmware to the station 200.

When the station 200 requests the cleaner body 100 for information for checking the firmware update conditions in operation 1705, the cleaner body 100 may transmit the information for checking the firmware update conditions to the station 200, in operation 1706. The 'information for checking the firmware update conditions' refers to information necessary for checking whether the firmware update conditions have been satisfied, and may include information about the communication state of the cleaner body 100, information about the location of the cleaner body 100, and information about the battery charging state of the cleaner body 100. According to an embodiment of the disclosure, the cleaner body 100 may be in a state of not currently being connected with another device through BLE communication and may be apart from the station 200 by a BLE communication possible distance or more, and the battery 160 may transmit information indicating a 40% charged state to the station 200.

In operation 1707, the station 200 may check whether the firmware update conditions have been satisfied, based on the information received from the cleaner body 100. When it is checked that the firmware update conditions have not been satisfied, the station 200 may return to operation 1705 after a predetermined period of time and request the cleaner body 100 for the information for checking the firmware update conditions.

When it is checked that the firmware update conditions have been satisfied, the station 200 may inform the cleaner body 100 that the firmware update conditions have been satisfied, in operation 1708, and may transmit, to the mobile terminal 20, a message display request asking whether to agree to the firmware update.

In operation 1709, the cleaner body 100 may output, to the input/output interface 120, a guide indicating that the firmware update is possible.

When receiving agreement to firmware update from the user 1 in operation 1711, the mobile terminal 20 may inform the station 200 that the user 1 has agreed to the firmware update, in operation 1712.

In operation 1713, the station 200 may transmit a new version of firmware to the cleaner body 100 and requests installation of the new version of firmware. In operation 1714, the cleaner body 100 may perform a firmware update by installing the received new version of firmware.

Referring to FIG. 18, in operation 1801, the station 200 transmits a firmware version check request to the cleaner body 100, and, in operation 1802, the cleaner body 100 may transmit version information of the firmware installed in the cleaner body 100 to the station 200.

In operation 1803, the station 200 may access the server 10 to periodically check whether a new version of firmware is stored in the memory 13 of the server 10.

When it is checked that the new version of firmware is stored in the memory 13 of the server 10, the station 200 may request the server 10 to transmit the new version of firmware, and, in operation 1804, the server 10 may transmit the new version of firmware to the station 200.

When the station 200 requests the cleaner body 100 for information for checking the firmware update conditions in operation 1805, the cleaner body 100 may transmit the information for checking the firmware update conditions to the station 200, in operation 1806. In operation 1807, the station 200 may transmit, to the server 10, information for checking the firmware update conditions. The 'information for checking the firmware update conditions' is the same as that described above with reference to FIG. 17.

In operation 1808, the server 10 may check whether the firmware update conditions have been satisfied, based on the information received from the station 200. When it is checked that the firmware update conditions have not been satisfied, the server 10 may transmit, to the station 200, a response indicating that the firmware update conditions have not been satisfied, in operation 1809. The station 200 may re-request the cleaner body 100 for the information for checking the firmware update conditions, after a certain time has elapsed after receiving the response, in operation 1805.

When it is checked in operation 1808 that the firmware update conditions have been satisfied, the server 10 proceeds to operation 1810 to inform the station 200 that the firmware update conditions have been satisfied. In operation 1811, the station 200 may notify the cleaner body 100 that the firmware update conditions have been satisfied. In operation 1813, the station 200 may request the mobile terminal 20 to display a message inquiring whether the user 1 agrees to a firmware update.

When the cleaner body 100 receives from the station 200 a notification indicating that the firmware update conditions have been satisfied, the cleaner body 100 may output a guide indicating that the firmware update is possible to the input/output interface 120, in operation 1812.

When receiving agreement to firmware update from the user 1 in operation 1814, the mobile terminal 20 may inform the station 200 that the user 1 has agreed to the firmware update, in operation 1815.

In operation 1816, the station 200 may transmit a new version of firmware to the cleaner body 100 and request installation of the new version of firmware. In operation 1817, the cleaner body 100 may perform a firmware update by installing the received new version of firmware.

In the above-described embodiments, when a new version of firmware is stored in the memory 13 of the server 10, the station 200 downloads the new version of firmware and stores the same in the memory 230, and then, when it is checked that the firmware update conditions have been satisfied and the user 1 has agreed to the firmware update, the firmware update is performed by performing all of the above-described operations.

According to an embodiment of the disclosure, the mobile terminal 20 instead of the station 200 may download and store a new version of firmware from the server 10 and transmit the new version of firmware to the cleaner body 100.

FIGS. 19 and 20 are diagrams for explaining an embodiment in which a firmware update is performed by a mobile terminal instead of a station downloading a new version of firmware from a server and transmitting the downloaded new version of firmware to a cleaner body.

Referring to FIG. 19, in operation 1901, the station 200 transmits a firmware version check request to the cleaner body 100, and, in operation 1902, the cleaner body 100 may transmit version information of the firmware installed in the cleaner body 100 to the station 200.

In operation 1903, the station 200 may access the server 10 to periodically check whether the new version of firmware is stored in the memory 13 of the server 10.

When it is checked that the new version of firmware is stored in the memory 13 of the server 10, the station 200 may transmit a firmware update condition check request to the cleaner body 100, in operation 1904. According to an embodiment of the disclosure, at a moment when the station 200 checks that the new version of firmware has been stored in the memory 13 of the server 10, when the station 200 is not connected to the cleaner body 100 through BLE or a distance between the station 200 and the cleaner body 100 is out of a BLE connection possible range, the station 200 may not request the server 10 to transmit the new version of firmware. In other words, the station 200 may not download the new version of firmware from the server 10 unless the station 200 is able to transmit the new version of firmware to the cleaner body 100 through BLE, thereby preventing unnecessary storage space waste.

In operation 1905, the cleaner body 100 may determine whether the firmware update conditions have been satisfied, and, when it is determined that the firmware update conditions have not been satisfied, may periodically re-check whether the firmware update conditions have been satisfied.

When the firmware update conditions have been satisfied, the cleaner body 100 may output, to the input/output interface 120 of the cleaner body 100, a guide indicating that the firmware update is possible, in operation 1906. A detailed method of output, to the input/output interface 120 of the cleaner body 100, the guide indicating that the firmware update is possible has been described above with reference to FIGS. 9 through 12.

In operation 1907, the cleaner body 100 may transmit, to the station 200, a check response indicating that the firmware update conditions have been satisfied.

In operation 1908, the station 200 may transmit, to the mobile terminal 20 of the user 1, a request to display a message inquiring whether the user 1 agrees to a firmware update.

At the request of the station 200, the mobile terminal 20 may display a message asking whether to agree to the firmware update on the screen, and, when agreement is received from the user 1 in operation 1909, the mobile terminal 20 may request the server 10 for a new version of firmware. In operation 1910, the server 10 may transmit the new version of firmware to the mobile terminal 20.

The mobile terminal 20 may store the received new version of firmware. In operation 1911, the mobile terminal 20 may establish a BLE connection with the cleaner body 100 and transmit the new version of firmware to the cleaner body 100 through BLE communication to request installation.

In operation 1912, the cleaner body 100 may perform a firmware update by installing the received new version of firmware.

FIG. 20 illustrates a situation where the mobile terminal 20 instead of the station 200 stores a new version of firmware and transmits the new version of firmware to the cleaner body 100.

In a general use environment, because the station 200 is fixed at a fixed position and the user 1 cleans while moving the cleaner body 100, a distance between the cleaner body 100 and the station 200 may be often out of the BLE communication possible range.

Because the user 1 often carries the mobile terminal 20, there is a high possibility that the mobile terminal 20 is located within a range in which the mobile terminal 20 is able to perform BLE communication with the cleaner body 100, and thus there may be a case where it is more advantageous for the mobile terminal 20 to transmit a new version of firmware to the cleaner body 100 through BLE communication.

In preparation for this case, the mobile terminal 20 instead of the station 200 may receive a new version of firmware from the server 10 and transmit the new version of firmware to the cleaner body 100.

A method of updating firmware of a vacuum cleaner composed of the station 200 and the cleaner body 100, according to an embodiment of the disclosure, may include an operation of receiving, by the cleaner body 100, a firmware update condition check request from the station 200, when a new version of firmware exists, an operation of checking whether firmware update conditions have been satisfied, and transmitting a result of the checking to the station 200, wherein the checking and transmitting is performed by the cleaner body 100, and an operation of, when the firmware update conditions are satisfied and a user agrees to update the firmware, receiving and installing the new version of firmware by the cleaner body 100. The firmware update conditions may include at least one of a communication condition, a location condition, or a battery condition of the cleaner body 100.

According to an embodiment of the disclosure, the transmitting of the result of the checking to the station 200 may include, when the firmware update conditions have been satisfied, outputting a guide indicating that a firmware update is possible, through a UI of the cleaner body 100, and transmitting, to the station 200, a response indicating that the firmware update conditions have been satisfied.

According to an embodiment of the disclosure, the outputting of the guide indicating that a firmware update is possible may include, when it is determined that the user presses a power button of the cleaner body 100, the cleaner body 100 is separated from the station 200, or the cleaner body 100 moves, outputting a guide indicating that firmware update is possible, through the UI of the cleaner body 100.

According to an embodiment of the disclosure, the outputting of the guide indicating that a firmware update is possible may include displaying a guide message to a display panel included in the cleaner body 100, together with a notification sound, when the cleaner body 100 is not in operation, and displaying a guide message to the display panel included in the cleaner body 100, together with a vibration, when the cleaner body 100 is in operation.

According to an embodiment of the disclosure, the transmitting of the result of the checking to the station 200 may include, when the firmware update conditions have not been satisfied, outputting a guide for satisfying the firmware update conditions, through the UI of the cleaner body 100, and, when the user performs an operation according to the guide and accordingly the firmware update conditions are satisfied, transmitting to the station 200 a response indicating that the firmware update conditions have been satisfied.

According to an embodiment of the disclosure, the receiving and installing of the new version of firmware may include, when receiving a response indicating that the firmware update conditions have been satisfied, from the cleaner body 100, controlling a mobile terminal 20 of the user to display a message inquiring whether to agree to update the firmware, wherein the controlling is performed by the station 200, when the user agrees to update the firmware, through the mobile terminal 20, requesting installation of a new version of firmware while transmitting the new version of firmware to the cleaner body 100, wherein the requesting is performed by the station 200, and installing the received new version of firmware, wherein the installing is performed by the cleaner body 100.

According to an embodiment of the disclosure, the receiving and installing of the new version of firmware may include displaying, by the cleaner body 100, a message asking the user whether to agree to update the firmware, through the UI of the cleaner body 100, determining whether the user agrees to update the firmware, when the user agrees, requesting the station 200 to transmit the new version of firmware, wherein the requesting is performed by the cleaner body 100, and receiving the new version of firmware from the station 200 and installing the received new version of firmware, wherein the receiving and installing is performed by the cleaner body 100.

According to an embodiment of the disclosure, the determining of whether the user agrees to update the firmware may include determining that the user agrees, when the user moves the cleaner body 100 according to a guide included in the message.

According to an embodiment of the disclosure, the displaying of the message asking the user whether to agree to update the firmware may include, when the cleaner body 100 is in operation, stopping the operation and displaying the message, and the determining of whether the user agrees to update the firmware may include, when the user operates the cleaner body 100 again, determining that the user does not agree to update the firmware.

According to an embodiment of the disclosure, the firmware update conditions may be satisfied when the cleaner body 100 is connected to the station 200 through BLE communication, the cleaner body 100 is mounted on the station 200, and a battery of the cleaner body 100 is charged to a certain standard or greater.

According to an embodiment of the disclosure, the firmware update conditions may be satisfied when a distance between the cleaner body 100 and the station 200 is within a range where BLE communication is available, and the battery of the cleaner body 100 is charges by the certain standard or greater.

According to an embodiment of the disclosure, the receiving and installing of the new version of firmware may include, when receiving a response indicating that the firmware update conditions have been satisfied, from the cleaner body 100, controlling the mobile terminal 20 of the user to display a message inquiring whether to agree to update the firmware, wherein the controlling is performed by the station 200, when the user agrees to update the firmware, through the mobile terminal 20, downloading the new version of firmware from the server 10, wherein the downloading is performed by the mobile terminal 20, establishing a communication connection with the cleaner body 100, wherein the establishing is performed by the mobile terminal 20, and transmitting the new version of firmware to the cleaner body 100, wherein the transmitting is performed by the mobile terminal 20.

A cleaner body 100 capable of communicating with a station 200 according to an embodiment of the disclosure includes a motor 150 configured to perform a cleaning operation, a communication interface 110 configured to perform wireless communication with the station 200, an input/output interface 120 configured to receive an input from a user and display information, a memory 130 storing a program for executing a firmware update, and a processor 140. The processor 140 is configured to execute the program to receive a firmware update condition check request from the station 200 when a new version of firmware exists, check whether firmware update conditions have been satisfied, transmit a result of the checking to the station 200, and, when the firmware update conditions are satisfied and a user agrees to a firmware update, receive and install the new version of firmware. The firmware update conditions include at least one of a communication condition, a location condition, or a battery condition of the cleaner body 100.

According to an embodiment of the disclosure, in the transmitting of the result of the checking to the station 200, when the firmware update conditions have been satisfied, the processor 140 may output a guide indicating that the firmware update is possible, through the input/output interface 120, and transmit, to the station 200, a response indicating that the firmware update conditions have been satisfied.

According to an embodiment of the disclosure, in outputting the guide indicating that the firmware update is possible, when it is determined that the user presses a power button of the cleaner body 100, the cleaner body 100 is separated from the station 200, or the cleaner body 100 moves, the processor 140 may output the guide indicating that the firmware update is possible, through the input/output interface 120.

According to an embodiment of the disclosure, in outputting the guide indicating that the firmware update is possible, the processor 140 may display a guide message to a display panel included in the input/output interface 120, together with a notification sound, when the cleaner body 100 is not in operation, and display a guide message to the display panel, together with a vibration, when the cleaner body 100 is in operation.

According to an embodiment of the disclosure, in the transmitting of the result of the checking to the station 200, when the firmware update conditions have not been satisfied, the processor 140 may output a guide for satisfying the firmware update conditions, through the input/output interface 120, and, when the firmware update conditions are satisfied by the user performing an operation according to the guide, may transmit, to the station 200, a response indicating that the firmware update conditions have been satisfied.

According to an embodiment of the disclosure, in receiving and installing the new version of firmware, the processor 140 may display a message inquiring whether the user agrees to a firmware update, determine whether the user agrees to the firmware update, request the station 200 to transmit the new version of firmware, when the user agrees, and receive and install the new version of firmware from the station 200.

According to an embodiment of the disclosure, in determining whether the user agrees to the firmware update, the processor 140 may determine that the user has agreed, when the user moves the cleaner body 100 according to a guide included in the message.

In displaying the message asking whether the user agrees to update the firmware, when the cleaner body 100 is in operation, the processor 140 may stop the operation and display the message. In determining whether the user agrees to update the firmware, when the user operates the cleaner body 100 again, the processor may determine that the user does not agree to update the firmware.

According to an embodiment of the disclosure, the firmware update conditions may be satisfied when the cleaner body 100 is connected to the station 200 through BLE communication, the cleaner body 100 is mounted on the station 200, and a battery of the cleaner body 100 is charged to a certain standard or greater.

According to an embodiment of the disclosure, the firmware update conditions may be satisfied when a distance between the cleaner body 100 and the station 200 is within a range where BLE communication is available, and the battery of the cleaner body 100 is charges by the certain standard or greater.

Various embodiments of the disclosure may be implemented or supported by one or more computer programs, and the one or more computer programs may be formed from computer-readable program code and may be included in computer-readable media. According to the disclosure, an "application" and a "program" may represent one or more computer programs, software components, instruction sets, procedures, functions, objects, classes, instances, related data, or a portion thereof, which are suitable for implementation in computer-readable program code. "Computer-readable program code" may include various types of computer code including source code, objective code, and executable code. "Computer-readable media" may include various types of media that may be accessed by a computer, like read only memory (ROM), random access memory (RAM), a hard disk drive (HDD), a compact disk (CD), a digital video disk (DVD), and various other types of memory.

A machine-readable storage medium may be provided as a non-transitory storage medium. The non-transitory storage media are tangible devices and may exclude wired, wireless, optical, or other communication links that transmit temporary electrical or other signals. The non-transitory storage media do not distinguish between a case in which data is semi-permanently stored in storage media and a case in which data is temporarily stored in storage media. For example, the non-transitory storage media may include a buffer in which data is temporarily stored. Computer readable media can be any available media which can be accessed by computers, and may include all volatile/non-volatile and removable/non-removable media. Computer readable media includes media in which data can be permanently stored and media in which data can be stored and later overwritten, such as rewritable optical disks or removable memory devices.

According to an embodiment of the disclosure, a method according to various disclosed embodiments may be provided by being included in a computer program product. The computer program product, which is a commodity, may be traded between sellers and buyers. Computer program products may be distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While the disclosure has been particularly shown and described with reference to exemplary embodiments thereof, it will be understood that various changes in form and details may be made therein without departing from the spirit and scope of the disclosure. For example, an appropriate result may be attained even when the above-described techniques are performed in a different order from the above-described method, and/or components, such as the above-described system, structure, device, and circuit, are coupled or combined in a different form from the above-described methods or substituted for or replaced by other components or equivalents thereof. Thus, the above-described embodiments should be considered in descriptive sense only and not for purposes of limitation. For example, each component described as a single type may be implemented in a distributed manner, and similarly, components described as being distributed may be implemented in a combined form.

The scope of the disclosure is indicated by the scope of the claims to be described below rather than the above detailed description, and all changes or modified forms derived from the meaning and scope of the claims and the concept of equivalents thereof should be interpreted as being included in the scope of the disclosure.

## Claims

1. A method of updating a firmware of a vacuum cleaner including a station 200 and a cleaner body 100, the method comprising:
receiving, by the cleaner body 100, a firmware update condition check request from the station 200 when a new version of the firmware exists;
checking, by the cleaner body 100, whether firmware update conditions have been satisfied;
transmitting, by the cleaner body 100, a result of the checking to the station 200; and
when the firmware update conditions are satisfied and a user agrees to update the firmware, receiving, by the cleaner body 100, the new version of the firmware, and installing, by the cleaner body 100, the received new version of the firmware,
wherein the firmware update conditions include at least one of a communication condition, a location condition, or a battery condition of the cleaner body.

2. The method of claim 1, wherein the transmitting, by the cleaner body 100, the result of the checking to the station 200 includes:
when the firmware update conditions have been satisfied:
outputting a guide to a user interface (UI) of the cleaner body 100,
indicating in the guide that a firmware update is possible, and
transmitting, to the station 200, a response indicating that the firmware update conditions have been satisfied.

3. The method of any one of claims 1 and 2, wherein the outputting the guide includes:
when it is determined that the user presses a power button of the cleaner body 100, the cleaner body 100 is separated from the station 200, or the cleaner body 100 moves, outputting the guide, through the UI of the cleaner body 100.

4. The method of any one of claims 1 through 3, wherein the transmitting, by the cleaner body 100, the result of the checking to the station 200 includes:
when the firmware update conditions have not been satisfied:
outputting a guide for satisfying the firmware update conditions to a user interface (UI) of the cleaner body 100, and
when the user performs an operation according to the outputted guide and thereby satisfies the firmware update conditions:
transmitting to the station 200 a response indicating that the firmware update conditions have been satisfied.

5. The method of any one of claims 1 through 4, wherein the receiving, by the cleaner body 100, the new version of the firmware, and installing, by the cleaner body 100, the received new version of the firmware includes:
receiving, by the station 200, a response from the cleaner body 100,
indicating in the response that the firmware update conditions have been satisfied,
controlling, by the station 200, a mobile terminal 20 of the user to display a message inquiring whether the user agrees to update the firmware;
when the user agrees to update the firmware through the mobile terminal 20, requesting, by the station 200, the cleaner body 100 to install the new version of the firmware while transmitting, by the station 200, the new version of the firmware to the cleaner body 100; and
installing, by the cleaner body 100, the received new version of firmware.

6. The method of any one of claims 1 through 5, wherein the receiving, by the cleaner body 100, the new version of the firmware, and installing, by the cleaner body 100 the received new version of the firmware includes:
displaying, by the cleaner body 100, a message through a user interface (UI) of the cleaner body 100,
asking, in the message, the user whether the user agrees to update the firmware,
determining whether the user agrees to update the firmware;
when the user agrees to updated the firmware, requesting, by the cleaner body 100, the station 200 to transmit the new version of the firmware;
receiving, by the cleaner body 100, the new version of firmware from the station 200; and
installing, by the cleaner body 100, the received new version of firmware.

7. The method of any one of claims 1 through 6, wherein the checking, by the cleaner body 100, whether the firmware update conditions have been satisfied includes:
determining the firmware update conditions are satisfied when the cleaner body 100 is connected to the station 200 through Bluetooth Low Energy (BLE) communication, the cleaner body 100 is mounted on the station 200, and a battery of the cleaner body 100 is charged to a preset standard or greater.

8. The method of any one of claims 1 through 7, wherein the checking, by the cleaner body 100, whether firmware updated conditions have been satisfied includes:
determining the firmware update conditions are satisfied when a distance between the cleaner body 100 and the station 200 is within a range where BLE communication is available, and a battery of the cleaner body 100 is charged to the preset standard or greater.

9. The method of any one of claims 1 through 8, wherein the receiving, by the cleaner body 100, the new version of the firmware, and installing, by the cleaner body 100, the received new version of the firmware includes:
receiving, from the cleaner body 100, a response indicating that the firmware update conditions have been satisfied,
controlling, by the station 200, a mobile terminal 20 of the user to display a message inquiring whether the user agrees to update the firmware,
when the user agrees to update the firmware, through the mobile terminal 20, downloading, by the mobile terminal 20, the new version of the firmware from the server 10,
establishing, by the mobile terminal 20, a communication connection with the cleaner body 100, and
transmitting, by the mobile terminal 20, the new version of the firmware to the cleaner body 100.

10. A cleaner body of a vacuum cleaner, the cleaner body 100 comprising:
a motor 150 configured to perform a cleaning operation;
a communication interface 110 configured to perform wireless communication with the station;
an input/output interface 120 configured to receive an input from a user and display information;
a memory 130 storing a program for executing a firmware update; and
a processor 140 configured to execute the program to perform:
receiving a firmware update condition check request from a station 200 of the vacuum cleaner when a new version of a firmware exists,
checking whether firmware update conditions have been satisfied,
transmitting a result of the checking to the station 200, and
when the firmware update conditions are satisfied and a user agrees to update the firmware, receiving the new version of the firmware, and installing the received new version of the firmware,
wherein the firmware update conditions include at least one of a communication condition, a location condition, or a battery condition of the cleaner body.

11. The cleaner body of claim 10, wherein
in the transmitting of the result of the checking to the station 200, when the firmware update conditions have been satisfied, the processor 140 is further configured to execute the program to perform:
outputting a guide to the input/output interface 120,
indicating in the guide that a firmware update is possible, and
transmitting, to the station 200, a response indicating that the firmware update conditions have been satisfied.

12. The cleaner body of any one of claims 10 and 11, wherein in the outputting the guide, the processor 140 is further configured to execute the program to perform:
when it is determined that the user presses a power button of the cleaner body 100, the cleaner body 100 is separated from the station 200, or the cleaner body 100 moves, output the guide, through the UI of the cleaner body.

13. The cleaner body of any one of claims 10 through 12, wherein
in the transmitting the result of the checking to the station 200 the processor 140 is further configured to execute the program to perform:
when the firmware update conditions have not been satisfied:
outputting a guide for satisfying the firmware update conditions to the input/output interface 120, and
when the user performs an operation according to the outputted guide and thereby satisfies the firmware update conditions:
transmitting to the station 200 a response indicating that the firmware update conditions have been satisfied.

14. The cleaner body of any one of claims 10 through 13, wherein in the checking whether the firmware update conditions are satisfied the processor 140 is further configured to execute the program to perform:
determining the firmware update conditions are satisfied when the cleaner body 100 is connected to the station 200 through BLE communication, the cleaner body 100 is mounted on the station 200, and a battery of the cleaner body 100 is charged to a preset standard or greater.

15. A non-transitory computer-readable recording medium having recorded thereon a computer program for executing the method of any one of claims 1 through 9, on a computer.
